# EUROPEAN PATENT APPLICATION

(11) **EP 4 002 796 A1**
(43) Date of publication of application: **25.05.2022**
(21) Application number: 19939974.2
(22) Date of filing: 09.10.2019
(51) Int. Cl.: H04L 29/08, H04L 29/12

(54) **RESOURCE ACQUISITION METHOD AND EDGE COMPUTING SCHEDULING SERVER**

(30) Priority: 26.07.2019 CN 201910681392
(71) Applicant: Wangsu Science & Technology Co., Ltd., Shanghai 200030 (CN)
(72) Inventor: WANG, Wenting, Shanghai 200030 (CN)
(74) Representative: De Arpe Tejero, Manuel
(86) International application number: PCT/CN2019/110151
(87) International publication number: WO 2021/017161

(57) **Abstract**

The present disclosure discloses a method for obtaining resource and a scheduling server for edge computing. The method includes: receiving a resource obtaining request transmitted from a terminal device, and determining whether a target resource directed by the resource obtaining request is stored in other terminal devices; and when the target resource is stored in the other terminal devices, determining a target terminal device from the other terminal devices, and feeding back a device identifier of the target terminal device to the terminal device, such that the terminal device obtains the target resource from the target terminal device. According to the technical solution provided by the present disclosure, efficiency of obtaining resource can be improved.

## Description

### TECHNICAL FIELD

The present disclosure relates to the field of Internet technology, and more particularly, to a method for obtaining resource and a scheduling server for edge computing.

### BACKGROUND

In a current content delivery network (CDN), after a node server receives a resource obtaining request transmitted from a user client, it may be searched from local cache whether a target resource directed by the resource obtaining request is exist, and the target resource may be provided to the user client when the target resource is exist. When the target resource is not exist, the target resource may be obtained from a cache server by means of back to source, and the obtained target resource is provided to the user client.

However, according to the above-mentioned data transmission method in the prior art, resource obtaining process of each user client needs to be supported by the CDN, which in one aspect may increase burden of the CDN, and in another aspect may have a negative effect on efficiency of obtaining resources for the user client once the CDN has network fluctuations.

### SUMMARY

An objective of the present disclosure is to provide a method for obtaining resource and a scheduling server for edge computing, which can improve efficiency of obtaining resource.

To achieve the foregoing objective, one aspect of the present disclosure provides a method for obtaining resource, the method includes: receiving a resource obtaining request transmitted from a terminal device, and determining whether a target resource directed by the resource obtaining request is stored in other terminal devices; and when the target resource is stored in the other terminal devices, determining a target terminal device from the other terminal devices, and feeding back a device identifier of the target terminal device to the terminal device, such that the terminal device obtains the target resource from the target terminal device

To achieve the foregoing objective, another aspect of the present disclosure also provides a scheduling server for edge computing. The scheduling server for edge computing includes a processor and a memory, wherein the memory is configured to store a computer program, and the computer program is executable by the processor, whereby the above-mentioned method for obtaining resource is implemented.

As can be seen from the above, technical solutions provided by the present disclosure can maintain a mapping relationship between the resource and the terminal device. After receiving a resource prefetching instruction transmitted by a device management center, the terminal device may transmit a resource obtaining request to the scheduling system for edge computing in response to the resource prefetching instruction. After receiving the resource obtaining request, the scheduling system for edge computing may determine whether a target resource directed by the resource obtaining request is stored in other terminal devices. When the target resource is stored in the other terminal devices, the scheduling system for edge computing may determine a target terminal device from the other terminal devices obtained by searching, and feed back a device identifier of the target terminal device to the terminal device, such that the terminal device obtains the target resource from the target terminal device. In this way, a plurality of terminal devices may provide each other with resources needed. In one aspect, burden of a content delivery network (CDN) is reduced, and in another aspect, flexibility of obtaining resource is also improved, and thus efficiency of obtaining resource is improved.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic structural diagram of a CDN system according to an embodiment of the present disclosure;
FIG. 2 is a schematic diagram showing steps of a method for node scheduling according to an embodiment of the present disclosure;
FIG. 3 is a schematic diagram of an IP address of a same point of presence (POP) according to an embodiment of the present disclosure;
FIG. 4 is a schematic structural diagram of a scheduling server for edge computing according to an embodiment of the present disclosure;
FIG. 5 is a schematic diagram of a method for domain name resolution according to an embodiment of the present disclosure; and
FIG. 6 is a schematic diagram showing an application scenario of a method for obtaining resource according to an embodiment of the present disclosure.

### DETAILED DESCRIPTION

To make the objectives, technical solutions and advantages of the present disclosure clearer, the embodiments of the present disclosure will be further described below in detail with reference to the accompanying drawings.

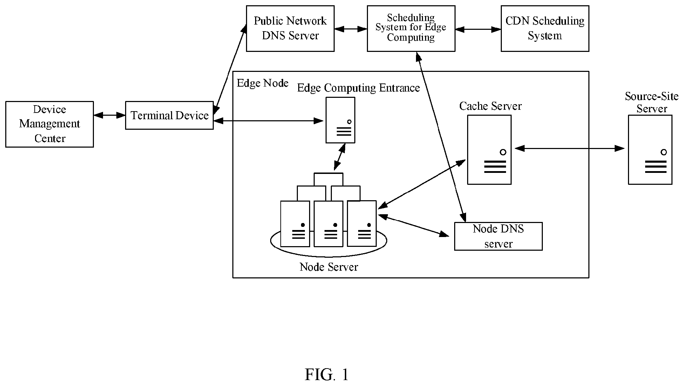

The present disclosure provides a method for node scheduling and a method for domain name resolution, and the method may be applied to a system architecture as shown in FIG. 1. The system as shown in FIG. 1 may include a plurality of components such as a device management center, a terminal device, an edge node, a source-site server, a public network domain name system (DNS) server, a scheduling system for edge computing, and a content delivery network (CDN) scheduling system. The edge node may include a cache server, a node DNS server inside the node, and a plurality of node servers.

In this embodiment, the aforementioned terminal device may be an electronic device sold by a manufacturer to a user, and the electronic device may have a network communication function and a resource storage function. For example, the terminal device may be a router with a data storage function. The device management center may be a central server pre-deployed by the manufacturer, and the device management center may communicate with the terminal device, to transmit a resource prefetching instruction to the terminal device. The terminal device may subsequently perform a domain name resolution by means of the public network DNS server, to access the nearest node server in a certain edge node of the CDN. The node server may obtain a corresponding resource from the cache server. When the cache server does not store the corresponding resource locally, the cache server may download the corresponding resource from the source-site server and provide the downloaded resource to the node server.

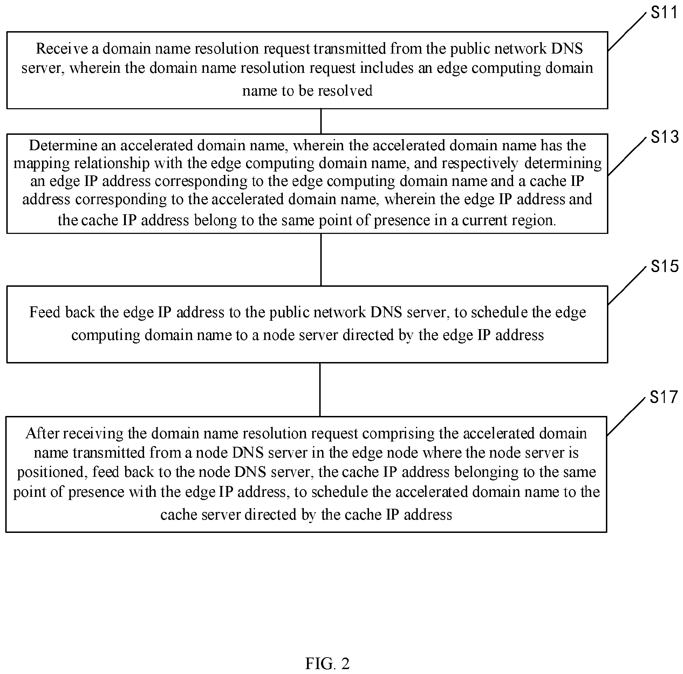

Referring to FIG. 2, the method for node scheduling provided by the present disclosure may be applied to the foregoing scheduling system for edge computing, and the method may include following steps.

S11: receiving a domain name resolution request transmitted from the public network DNS server, wherein the domain name resolution request includes an edge computing domain name to be resolved.

In this embodiment, after receiving the resource prefetching instruction of a hotspot resource transmitted by the device management center, the terminal device may construct an edge computing domain name for accessing the hotspot resource according to a resource identifier carried in the resource prefetching instruction. The edge computing domain name that constructed may include a top-level domain name for storing a website of the hotspot resource and a resource identifier of the hotspot resource. In this way, the edge computing domain name that constructed may be a uniform resource locator (URL) carrying the resource identifier.

In this embodiment, the terminal device may obtain a corresponding hotspot resource by accessing the above-mentioned edge computing domain name. Specifically, the terminal device may transmit a domain name resolution request to the public network DNS server, wherein the domain name resolution request may carry the above-mentioned edge computing domain name. In conventional domain name resolution technologies, the public network DNS server may resolve the edge computing domain name into a corresponding IP address according to a pre-configured mapping relationship between the domain name and the IP address. However, to ensure that the node server accessed by the terminal device and the cache server are in the same point of presence (POP), in this embodiment, a scheduling system for edge computing may be employed to change a domain name resolution result of the public network DNS server. Therefore, after receiving the domain name resolution request transmitted from the terminal device, the public network DNS server may forward the domain name resolution request to the scheduling system for edge computing, such that the scheduling system for edge computing to determines, an IP address of which node server should the edge computing domain name be resolved into.

S13: determining an accelerated domain name, wherein the accelerated domain name has the mapping relationship with the edge computing domain name, and respectively determining an edge IP address corresponding to the edge computing domain name and a cache IP address corresponding to the accelerated domain name, wherein the edge IP address and the cache IP address belong to the same point of presence in a current region.

In this embodiment, the edge computing domain name for the terminal device to access the hotspot resource generally has an accelerated domain name having a mutual mapping relationship with respect to the edge computing domain name in the CDN. The mapping relationship between the edge computing domain name and the accelerated domain name may be pre-deployed in the CDN. For example, a edge computing domain name accessed by a terminal device is www.baidu.com, and the accelerated domain name of the edge computing domain name in the CDN may be baidu.wangsu.com. The edge computing domain name may be configured for determining the node server accessed by the terminal device, and the accelerated domain name may be configured for determining the cache server storing the above-mentioned hotspot resource.

In this embodiment, after the scheduling system for edge computing receives the domain name resolution request forwarded by the public network DNS server, to ensure that node servers determined subsequently and cache servers belong to the same POP, the accelerated domain name having the mapping relationship with the edge computing domain name may be searched out according to a pre-configured mapping relationship table.

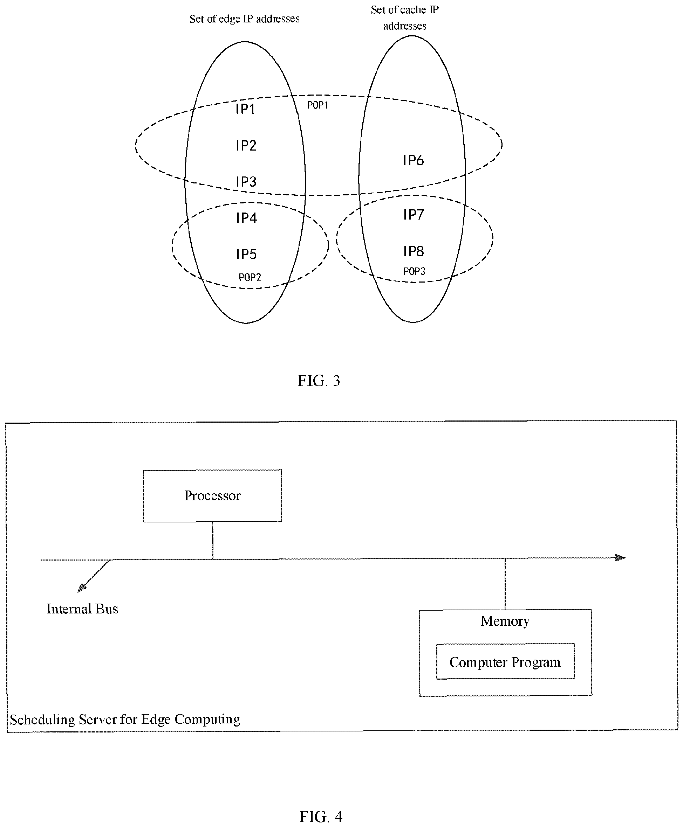

In the above-mentioned CDN scheduling system, an edge IP address of each node server and a cache IP address of each cache server in the CDN may be collected, and POP information corresponding to each IP address may be summarized. In this embodiment, after the edge IP address, the cache IP address and the POP information are collected, the CDN scheduling system may provide these IP addresses and the POP information to the scheduling system for edge computing. Later, the scheduling system for edge computing may determine the node server and cache server belong to the same POP based on the information provided by the CDN scheduling system. In this way, in the scheduling system for edge computing, a set of edge IP addresses of the edge computing domain name may be pre-configured, wherein the set of edge IP addresses may include one or more edge IP addresses. Different edge IP addresses may direct to different node servers in the CDN. In this way, by resolving the edge computing domain name into one of the edge IP addresses, the domain name resolution request sending by the terminal device may be scheduled to the node server directed by the edge IP address. In practical applications, different edge IP addresses may have different POP information. Therefore, according to the POP information of each IP address provided by the CDN scheduling system, each edge IP address in the set of edge IP addresses may be classified, and the edge IP addresses of the same category may belong to the same POP. Referring to FIG. 3, assuming that the set of edge IP addresses includes five edge IP addresses, and the five edge IP addresses may be classified into two categories, wherein IP1 to IP3 belong to POP1, and IP4 and IP5 belong to POP2. Similarly, in the scheduling system for edge computing, there may also be a set of cache IP addresses of the accelerated domain name, and each cache IP address in the set of cache IP addresses may also be classified according to the POP information. For example, in FIG. 3, the set of cache IP addresses of the accelerated domain name includes three cache IP addresses, wherein IP6 belongs to POP1, and IP7 and IP8 belong to POP3.

It is to be noted that in practical applications, the CDN system generally covers different regions, and thus the set of edge IP addresses and the set of cache IP addresses are specific to a certain region. As a scope of the region expands or shrinks, number of IP addresses included in the set of edge IP addresses and the set of cache IP addresses may also increase or decrease accordingly. Specifically, the set of edge IP addresses and the set of cache IP addresses of the corresponding region may be selected according to a geographical position of the terminal device sending the domain name resolution request. For example, when the terminal device is positioned in Xiamen, the scheduling system for edge computing may schedule a set of edge IP addresses and a set of cache IP addresses of the Xiamen region in response to the domain name resolution request sent from the terminal device. Of course, in some special cases, when the current region does not have a corresponding set of edge IP addresses and/or set of cache IP addresses, a set of edge IP addresses and/or a set of cache IP addresses of a high-level region to which the current region is subordinate may be selected. For example, for a domain name resolution request sent from a terminal device in Xiamen, a set of edge IP addresses and/or a set of cache IP addresses in Fujian or South China may be selected.

In this embodiment, after the accelerated domain name having the mapping relationship with the edge computing domain name is determined, the scheduling system for edge computing may determine separately, in the current region, a set of edge IP addresses corresponding to the edge computing domain name and a set of cache IP addresses corresponding to the accelerated domain name. Next, to ensure that the node server and the cache server belong to the same POP, the scheduling system for edge computing may determine the edge IP address and the cache IP address belonging to the same point of presence from the set of edge IP addresses and the set of cache IP addresses. For example, in FIG. 3, IP1 to IP3 belong to POP1, and IP6 also belongs to POP1. Therefore, IP1 to IP3 may be determined as the edge IP addresses, and IP6 may be determined as the cache IP address.

In this way, by means of the scheduling system for edge computing, an edge IP address corresponding to the edge computing domain name and a cache IP address corresponding to the accelerated domain name may be determined separately, and the edge IP address and the cache IP address belong to the same point of presence of the current region.

S15: feeding back the edge IP address to the public network DNS server, to schedule the edge computing domain name to a node server directed by the edge IP address.

In this embodiment, after the edge IP address and the cache IP address belonging to the same POP of the current region are determined, the scheduling system for edge computing may feed back the edge IP address to the public network DNS server, such that the public network DNS server resolves the edge computing domain name of the terminal device into the received edge IP address. When there are a plurality of edge IP addresses received, any one of the plurality of edge IP addresses may be selected, or one of the plurality of edge IP addresses may be selected according to a pre-configured load balancing policy.

In this embodiment, the terminal device may access the corresponding node server according to the edge IP address fed back by the public network DNS server. In this way, the edge computing domain name accessed by the terminal device is scheduled to the node server directed by the edge IP address.

S17: after receiving the domain name resolution request comprising the accelerated domain name transmitted from a node DNS server in the edge node where the node server is positioned, feeding back to the node DNS server, the cache IP address belonging to the same point of presence with the edge IP address, to schedule the accelerated domain name to the cache server directed by the cache IP address.

In this embodiment, in the edge node where the node server is positioned, a node DNS server of this node may be deployed, wherein this node DNS server may be configured to resolve the accelerated domain name accessed by the node server into the corresponding cache IP address. Specifically, the edge computing domain name accessed by the terminal device may be converted, in the edge node, into the accelerated domain name having the mapping relationship. In this way, the node server may send a domain name resolution request including the accelerated domain name to the node DNS server of this node. After receiving the domain name resolution request, the node DNS server may also forward the domain name resolution request to the scheduling system for edge computing, such that the scheduling system for edge computing determines which cache IP address should the accelerated domain name be resolved to.

The scheduling system for edge computing has determined the edge IP address and the cache IP address belonging to the same POP in the current region. Therefore, after the domain name resolution request transmitted from the node DNS server is received, the cache IP address with which the edge IP address belongs to the same point of presence may be fed back to the node DNS server. In this way, the node DNS server may resolve the accelerated domain name to the cache IP address, such that the accelerated domain name is scheduled to the cache server directed by the cache IP address. Subsequently, the node server may access the cache server directed by the cache IP address. Because the edge IP address of the node server and the cache IP address of the cache server belong to the same POP in the current region, there is no problem to cross-POP communication, and thus a problem of extra charges and higher delay caused by the cross-POP communication can be avoided.

In one embodiment, when in the current region there are neither edge IP addresses nor cache IP addresses belonging to the same point of presence, the scheduling system for edge computing may expand a coverage of the region, and search for an edge IP address and a cache IP address whether belonging to the same point of presence from the region having a larger coverage. Specifically, when in the current region there are neither edge IP addresses nor cache IP addresses belonging to the same point of presence, the scheduling system for edge computing may determine a high-level region to which the current region is subordinate, and determine, from the high-level region, an edge IP address and a cache IP address belonging to the same point of presence. For example, when in the region of Xiamen there are neither edge IP addresses nor cache IP addresses belonging to the same point of presence, the scheduling system for edge computing may determine, from the region of Fujian or even the entire South China Region, an edge IP address and a cache IP address belonging to the same point of presence. In this way, by continuously expanding the coverage of the region, the edge IP address and the cache IP address belonging to the same point of presence may be gradually found out.

In one embodiment, when in the high-level region there are still neither edge IP addresses nor cache IP addresses belonging to the same point of presence, to ensure quality of communication between the terminal device and the node server, and, between the node server and the cache server, it is not advisable to continue to expand the coverage of the region. Otherwise, although the edge IP address and the cache IP address obtained by searching belong to the same POP, the quality of communication between the terminal device and the node server, and, between the node server and the cache server may be poorer due to farther geographical location. In view of this, in this embodiment, when in the high-level region there are still neither edge IP addresses nor cache IP addresses belonging to the same point of presence, the scheduling system for edge computing may obtain a set of edge IP addresses pre-configured in the current region for the edge computing domain name, and feed back the set of edge IP addresses to the public network DNS server, such that the public network DNS server resolves the edge computing domain name into a target IP address in the set of edge IP addresses. Subsequently, after a node DNS server in the edge node where the node server directed by the target IP address is positioned sends the domain name resolution request comprising the accelerated domain name to the scheduling system for edge computing, the scheduling system for edge computing may obtain a set of cache IP addresses pre-configured in the current region for the accelerated domain name, and feed back the set of cache IP addresses to the node DNS server, such that the node DNS server resolves the accelerated domain name into a cache IP address in the set of cache IP addresses. An objective of this processing is that in this scenario, the node server and the cache server are no longer intentionally required to belong to the same POP, instead of a premise of network communication quality, the terminal device is allowed to enjoy a better data transmission effect.

In one embodiment, the node server and the cache server in the CDN may likely break down or get changed, resulting in changes of the edge IP address corresponding to the edge computing domain name and of the cache IP address corresponding to the cache server. In addition, with network line adjustment, POP information of each IP address may also likely get changed. Therefore, the CDN scheduling system may periodically collect IP addresses corresponding to edge computing domain names and accelerated domain names, and POP information of each of the IP addresses. Once the IP addresses or the POP information get changed from the previous version, a node information change notification may be transmitted to the scheduling system for edge computing. In the node information change notification, a changed IP address and/or POP information corresponding to the changed IP address may be indicated. In this way, the scheduling system for edge computing may update, according to the node information change notification, the IP address information and the POP information in the set of edge IP addresses and the set of cache IP addresses stored locally, to ensure that the node server and the cache server belonging to the same POP in the current region can be determined when subsequently processing the domain name resolution request.

The present disclosure also provides a scheduling system for edge computing, which includes:

a domain name resolution request receiving unit, configured to receive a domain name resolution request transmitted from a public network domain name system (DNS) server, wherein the domain name resolution request includes an edge computing domain name to be resolved;

a same point of presence (POP) determining unit, configured to determine an accelerated domain name, wherein the accelerated domain name has a mapping relationship with the edge computing domain name, and respectively determine an edge IP address corresponding to the edge computing domain name and a cache IP address corresponding to the accelerated domain name, wherein the edge IP address and the cache IP address belong to the same point of presence in a current region;
an edge scheduling unit, configured to feed back the edge IP address to the public network DNS server, to schedule the edge computing domain name to a node server directed by the edge IP address; and
a cache scheduling unit, configured to feed back to a node DNS server, after receiving the domain name resolution request comprising the accelerated domain name transmitted from the node DNS server in the edge node where the node server is positioned, the cache IP address belonging to the same point of presence with the edge IP address, to schedule the accelerated domain name to the cache server directed by the cache IP address.

In one embodiment, the same POP determining unit includes:
an IP address set determining module, configured to respectively determine, in the current region, a set of edge IP addresses corresponding to the edge computing domain name and a set of cache IP addresses corresponding to the accelerated domain name; and
a same POP filtering module, configured to determine the edge IP address and the cache IP address belonging to the same point of presence from the set of edge IP addresses and the set of cache IP addresses.

In one embodiment, the system also includes:
a high-level region determining unit, configured to determine, when the edge IP address and the cache IP address belonging to the same point of presence are not exist in the current region, a high-level region to which the current region is subordinate, and determine an edge IP address and a cache IP address belonging to a same point of presence in the high-level region; and
a pre-configuration unit, configured to obtain, when the edge IP address and the cache IP address belonging to the same point of presence are not exist in the high-level region, a set of edge IP addresses pre-configured in the current region for the edge computing domain name, and feed back the set of edge IP addresses to the public network DNS server, such that the public network DNS server resolves the edge computing domain name into a target IP address in the set of edge IP addresses.

In one embodiment, the cache scheduling unit is also configured to obtain, after receiving the domain name resolution request comprising the accelerated domain name transmitted from the node DNS server in the edge node directed by the target IP address, a set of cache IP addresses pre-configured in the current region for the accelerated domain name, and feed back the set of cache IP addresses to the node DNS server, such that the node DNS server resolves the accelerated domain name into an IP address in the set of cache IP addresses.

In one embodiment, the system also includes:
an information updating unit, configured to receive a node information change notification transmitted from a content delivery network (CDN) scheduling system, and update, according to the node information change notification, IP address information and point of presence (POP) information in the set of edge IP addresses and the set of cache IP addresses.

Referring to FIG. 4, the present disclosure also provides a scheduling server for edge computing, which includes a processor and a memory, wherein the memory is configured to store a computer program, and the above method for node scheduling is implemented when the computer program is executed by the processor.

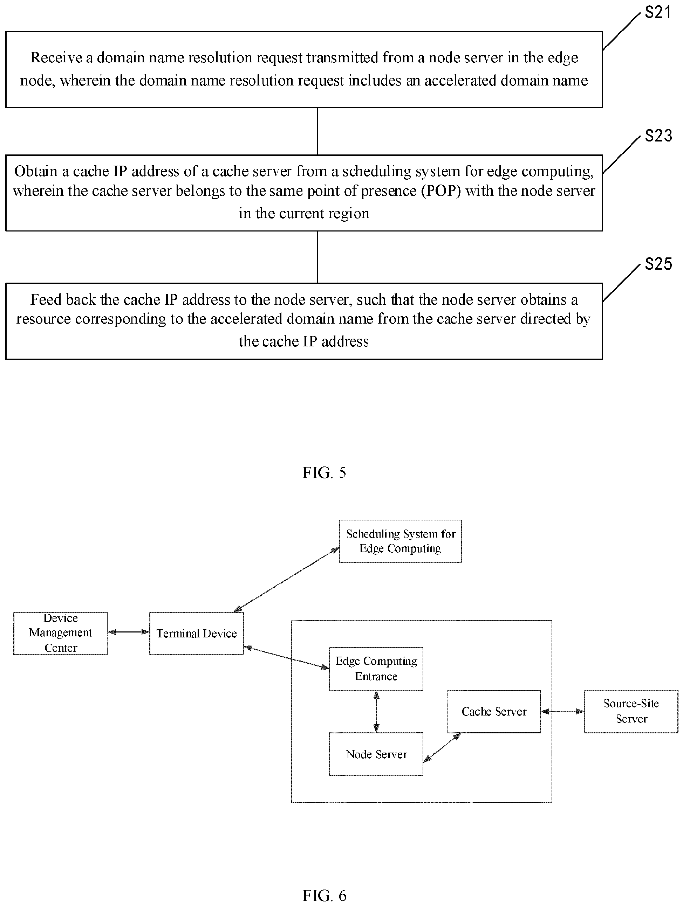

The present disclosure also provides a method for domain name resolution, which may be applied to a node DNS server in an edge node. Referring to FIG. 5, the method includes following steps.

S21: receiving a domain name resolution request transmitted from a node server in the edge node, wherein the domain name resolution request includes an accelerated domain name.

S23: obtaining a cache IP address of a cache server from a scheduling system for edge computing, wherein the cache server belongs to the same point of presence (POP) with the node server in the current region.

S25: feeding back the cache IP address to the node server, such that the node server obtains a resource corresponding to the accelerated domain name from the cache server directed by the cache IP address.

In this embodiment, in the edge node where the node server is positioned, a node DNS server of this node may be deployed, wherein this node DNS server may be configured to resolve the accelerated domain name accessed by the node server into the corresponding cache IP address. Specifically, the edge computing domain name accessed by the terminal device may be converted, in the edge node, into the accelerated domain name having the mapping relationship. In this way, the node server may transmit a domain name resolution request including the accelerated domain name to the node DNS server of this node. After receiving the domain name resolution request, the node DNS server may forward the domain name resolution request to the scheduling system for edge computing, such that the scheduling system for edge computing determines which cache IP address should the accelerated domain name be resolved to.

The scheduling system for edge computing has determined the edge IP address and the cache IP address belonging to the same POP in the current region. Therefore, after the domain name resolution request transmitted from the node DNS server is received, the cache IP address of the cache server with which the node server belongs to the same point of presence may be fed back to the node DNS server. In this way, the node DNS server may resolve the accelerated domain name to the cache IP address, such that the accelerated domain name is scheduled to the cache server directed by the cache IP address. Subsequently, the node server may access the cache server directed by the cache IP address. Because the edge IP address of the node server and the cache IP address of the cache server belong to the same POP in the current region, there is no problem of cross-POP communication, and thus a problem of extra charges and higher delay caused by the cross-POP communication can be avoided.

In one embodiment, the method also includes:
when a node server and a cache server belonging to the same point of presence are not exist in the current region, obtaining, from the scheduling system for edge computing, the cache IP address of the cache server, wherein the cache sever belongs to the same point of presence with the node server in a high-level region where the current region is subordinate to.

In one embodiment, the method also includes:
when a node server and a cache server belonging to the same point of presence are not exist in the high-level region, obtaining a set of cache IP addresses pre-configured for the node DNS server from the scheduling system for edge computing, and feeding back the set of cache IP addresses to the node server, such that the node server obtains the resource corresponding to the accelerated domain name from the cache server directed by any one IP address in the set of cache IP addresses.

The present disclosure also provides a node DNS server, wherein the node DNS server is positioned in an edge node, and the node DNS server includes:
a request receiving unit, configured to receive a domain name resolution request transmitted from a node server in the edge node, wherein the domain name resolution request includes an accelerated domain name;
an IP address information obtaining unit, configured to obtain a cache IP address of a cache server from a scheduling system for edge computing, wherein the cache server belongs to the same point of presence (POP) with the node server in the current region; and
a domain name resolution unit, configured to feed back the cache IP address to the node server, such that the node server obtains a resource corresponding to the accelerated domain name from the cache server directed by the cache IP address.

In one embodiment, the IP address information obtaining unit is also configured to obtain from the scheduling system for edge computing, when a node server and a cache server belonging to the same point of presence are not exist in the current region, the cache IP address of the cache server belonging to the same point of presence with the node server in a high-level region where the current region is subordinate to.

In one embodiment, the domain name resolution unit is also configured to obtain from the scheduling system for edge computing, when a node server and a cache server belonging to the same point of presence are not exist in the high-level region, a set of cache IP addresses pre-configured for the node DNS server, and feed back the set of cache IP addresses to the node server, such that the node server obtains the resource corresponding to the accelerated domain name from the cache server directed by any one IP address in the set of cache IP addresses.

The present disclosure also provides a node DNS server, which includes a processor and a memory, wherein the memory is configured to store a computer program. When the computer program is executed by the processor, the above-mentioned method for domain name resolution is implemented.

The present disclosure also provides a method for obtaining resource. Referring to FIG. 6, the method may be applied to the system as shown in FIG. 6. Specifically, the method may include following steps.

S31: receiving a resource obtaining request transmitted from a terminal device, and determining whether a target resource directed by the resource obtaining request is stored in other terminal devices.

In this embodiment, after receiving a resource prefetching instruction transmitted by a device management center, the terminal device may transmit the resource obtaining request to the scheduling system for edge computing in response to the resource prefetching instruction. After receiving the resource obtaining request, the scheduling system for edge computing may determine whether the target resource directed by the resource obtaining request is stored in other terminal devices.

In practical applications, a mapping relationship table between the resource and the terminal device may be maintained. In the mapping relationship table, a resource identifier may be associated and stored with the terminal device storing the resource. In this way, based on the resource identifier, it may be quickly searched out whether there is an associated terminal device.

In this embodiment, the scheduling system for edge computing may extract a resource identifier of a target resource in the resource obtaining request, and search from the mapping table whether there are other terminal devices associated with the resource identifier of the target resource, to determine whether the target resource directed by the resource obtaining request is stored in the other terminal devices.

S33: when the target resource is stored in the other terminal devices, determining a target terminal device from the other terminal devices, and feeding back a device identifier of the target terminal device to the terminal device, such that the terminal device obtains the target resource from the target terminal device.

In this embodiment, when the target resource is stored in the other terminal devices, the scheduling system for edge computing may determine one target terminal device from the other terminal devices obtained. In practical applications, the target terminal device may be determined in a variety of ways. For example, one terminal device may be randomly selected from the other terminal devices as the target terminal device. Also, a terminal device with a lower current load may be determined as the target terminal device according to a load balancing algorithm. Load of the terminal device may refer to number of point to point (P2P) communication links currently established by the terminal device. The larger the number is, the higher the load is. Of course, in practical applications, there are more ways to select a target terminal device from a plurality of other terminal devices, which is not enumerated one by one here.

In this embodiment, after the target terminal device is determined, the scheduling system for edge computing may feed back the device identifier of the target terminal device to the terminal device, such that the terminal device obtains the target resource from the target terminal device. The device identifier of the target terminal device may refer to a network communication address of the target terminal device, or may refer to a character string complying with a P2P communication protocol for characterizing an identity of the target terminal device. In this way, after the terminal device transmitting the resource obtaining request receives the device identifier of the target terminal device, the terminal device may establish P2P communication with the target terminal device, and may obtain the target resource from the target terminal device.

In one embodiment, when the target resource is not stored in the other terminal devices, the scheduling system for edge computing may select to obtain the target resource by means of backtracking. Specifically, the scheduling system for edge computing may recognize an edge computing domain name of the resource obtaining request, and determine an accelerated domain name, wherein the accelerated domain name has a mapping relationship with the edge computing domain name. Next, the scheduling system for edge computing may obtain a target resource directed by the accelerated domain name from the cache server, and provide the obtained target resource to the terminal device. A process of determining the accelerated domain name is similar to the description in Step S13, and thus is not to be described here.

In one embodiment, to meet a manufacturer's self-customized requirements, the manufacturer may be allowed to perform operations such as encryption and transcoding on a cache content. Specifically, the manufacturer may deploy a custom program on the node server in the edge node of the CDN, to perform operations such as encryption and transcoding on the cache content by means of the custom program. That is, a custom program is also deployed in the edge node. After obtaining the target resource directed by the accelerated domain name from the cache server, the edge node may process the target resource by utilizing the custom program, and then provide the processed resource to the terminal device.

The present disclosure also provides a scheduling server for edge computing, which includes a processor and a memory, wherein the memory is configured to store a computer program. The computer program is executable by the processor, whereby the above-mentioned method for obtaining resource is implemented.

The present disclosure also provides a method for node scheduling, wherein the method may be applied to the scheduling system for edge computing, and the method includes following steps.

S41: receiving a resource obtaining request transmitted from a terminal device, and searching for a cache server storing a target resource directed by the resource obtaining request.

S42: feeding back, to the terminal device, an IP address of an edge node positioned in a same server room with the cache server, such that the target resource is obtained from the cache server in the same server room by means of the edge node after the terminal device accesses an edge node at the IP address.

In this embodiment, the scheduling system for edge computing may receive the resource obtaining request transmitted from the terminal device, and may search from the CDN for the cache server storing the target resource directed by the resource obtaining request. To allow the edge node accessed by the terminal device and the cache server storing the target resource to be positioned in the same POP, the scheduling system for edge computing may search for the edge node positioned in the same server room with the cache server. In this way, the edge node and the cache server are positioned in the same server room, thus it may be ensured that the edge node accessed by the terminal device and the cache server storing the target resource are positioned in the same POP.

In this embodiment, the scheduling system for edge computing may feed back an IP address of the edge node positioned in the same server room with the cache server to the terminal device, such that after the terminal device accesses the edge node at the IP address, the target resource is obtained from the cache server in the same server room by means of the edge node.

In practical applications, the terminal device may obtain an encrypted original link transmitted by the device management center, such that the target resource may be accessed by means of the original link. The original link may be carried in the resource obtaining request transmitted from the terminal device to the scheduling system for edge computing. Subsequently, after the IP address of the edge node is obtained, the scheduling system for edge computing may generate a redirected link comprising the IP address, and feed back the redirected link to the terminal device. Meanwhile, the scheduling system for edge computing may also feed back the original link of the target resource to the terminal device, such that the terminal device may access the edge node according to the redirected link, and may provide the original link to the edge node. The edge node may obtain the target resource from the cache server in the same server room according to the original link, and feed the obtained target resource back to the terminal device. In this way, it may be ensured that the edge node accessed by the terminal device and the cache server are positioned in the same POP.

The present disclosure also provides a scheduling server for edge computing, which includes a processor and a memory, wherein the memory is configured to store a computer program. The computer program is executable by the processor, whereby the above-mentioned method for node scheduling may be implemented.

It is to be noted that in practical applications, the scheduling system for edge computing may perform the Steps S31 and S33, and give priority to determining whether the target resource exists in other terminal devices. When the target resource exists in the other terminal devices, the resource may be obtained between the terminal device and the target terminal device by means of P2P. When the target resource does not exist in the other terminal devices, the resource may be obtained through two different scheduling methods as described from steps S11 to S17 or steps S41 to S42, such that cross-POP data transmission may be avoided, billing costs may be saved, and a lower network delay can be ensured, and thus efficiency of data transmission is improved.

As can be seen from the above, technical solutions provided by the present disclosure can maintain a mapping relationship between the resource and the terminal device. After receiving a resource prefetching instruction transmitted by a device management center, the terminal device may transmit a resource obtaining request to the scheduling system for edge computing in response to the resource prefetching instruction. After receiving the resource obtaining request, the scheduling system for edge computing may determine whether the target resource directed by the resource obtaining request is stored in other terminal devices. When the target resource is stored in the other terminal devices, the scheduling system for edge computing may determine a target terminal device from the other terminal devices obtained by searching, and feed back a device identifier of the target terminal device to the terminal device, such that the terminal device obtains the target resource from the target terminal device. In this way, a plurality of terminal devices may provide each other with resources needed. In one aspect, burden of a content delivery network (CDN) is reduced, and in another aspect, flexibility of obtaining resource is also improved, and thus efficiency of obtaining resource is improved. In addition, in preferred embodiments of the present disclosure, a scheduling system for edge computing may be added into the CDN, and a node DNS server may be added into each edge node. After receiving a domain name resolution request transmitted from the terminal device, the public network DNS server may forward the domain name resolution request to the scheduling system for edge computing, wherein the domain name resolution request may carry an edge computing domain name to be resolved. Inside the CDN, the edge computing domain name may be mutually mapped to an accelerated domain name in advance. The above public network DNS server may resolve the edge computing domain name to obtain an IP address of a corresponding node server, and the accelerated domain name may be resolved by the node DNS server to obtain an IP address of a corresponding cache server. To ensure that the node server and the cache server belong to the same POP, in the scheduling system for edge computing, the accelerated domain name having a mapping relationship may be determined according to the above edge computing domain name. Next, the edge IP address and the cache IP address belonging to the same POP of the current region may be filtered out, and the filtered edge IP address may be fed back to the public network DNS server. In this way, the public network DNS server may resolve the edge computing domain name to the edge IP address, such that the domain name resolution request of the terminal device may be scheduled to a node server directed by the edge IP address. Subsequently, after receiving the accelerated domain name resolution request transmitted from the node DNS server in the edge node, the scheduling system for edge computing may feed back the above cache IP address to the node DNS server. In this way, the node server may obtain the corresponding resource from the cache server directed by the cache IP address. Because the edge IP address and the cache IP address belong to the same POP of the current region, data transmission between the corresponding node server and the corresponding cache server is data transmission in the same POP, which does not cause cross-POP data transmission, such that billing costs may be saved, and a lower network delay can be ensured, and thus efficiency of data transmission is improved.

Embodiments of this specification are described in a progressive manner, with the same or similar parts in different embodiments available for mutual reference, and difference from other embodiments is focused on in each embodiment. In particular, reference may to the introduction of the embodiments of the foregoing method to construe embodiments of the edge node.

It can be known from the foregoing implementations, those skilled in the art may clearly know that various implementations can be implemented by feat of software and necessary general hardware platform, or of course by means of hardware. Based on such an understanding, the foregoing technical solutions in essence or that part of contribution to the prior art may be embodied in the form of software products, which may be stored in computer-readable storage media, such as ROM/RAM, diskettes or optical disks and the like, including some instructions such that it is possible to execute embodiments or methods as recited in some parts of embodiments by a computer device (personal computers or servers, or network device, etc.).

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A method for obtaining resource, comprising:
receiving a resource obtaining request transmitted from a terminal device, and determining whether a target resource directed by the resource obtaining request is stored in other terminal devices; and
when the target resource is stored in the other terminal devices, determining a target terminal device from the other terminal devices, and feeding back a device identifier of the target terminal device to the terminal device, such that the terminal device obtains the target resource from the target terminal device.

2. The method according to claim 1, further comprising:
when the target resource is not stored in the other terminal devices, recognizing an edge computing domain name of the resource obtaining request, and determining an accelerated domain name, wherein the accelerated domain name has a mapping relationship with the edge computing domain name; and
obtaining a target resource directed by the accelerated domain name from a cache server by means of an edge node, and providing the obtained target resource to the terminal device.

3. The method according to claim 2, wherein the recognizing an edge computing domain name of the resource obtaining request, and determining an accelerated domain name, wherein the accelerated domain name has a mapping relationship with the edge computing domain name comprising:
receiving a domain name resolution request transmitted from a public network domain name system (DNS) server, wherein the domain name resolution request comprises an edge computing domain name to be resolved;
determining the accelerated domain name having the mapping relationship with the edge computing domain name, and respectively determining an edge IP address corresponding to the edge computing domain name and a cache IP address corresponding to the accelerated domain name, wherein the edge IP address and the cache IP address belong to a same point of presence in a current region;
feeding back the edge IP address to the public network DNS server, to schedule the edge computing domain name to a node server directed by the edge IP address; and
after receiving the domain name resolution request comprising the accelerated domain name transmitted from a node DNS server in the edge node where the node server is positioned, feeding back to the node DNS server, the cache IP address belonging to the same point of presence with the edge IP address, to schedule the accelerated domain name to the cache server directed by the cache IP address.

4. The method according to claim 3, wherein the respectively determining an edge IP address corresponding to the edge computing domain name and a cache IP address corresponding to the accelerated domain name comprising:
respectively determining, in the current region, a set of edge IP addresses corresponding to the edge computing domain name and a set of cache IP addresses corresponding to the accelerated domain name; and
determining the edge IP address and the cache IP address belonging to the same point of presence from the set of edge IP addresses and the set of cache IP addresses.

5. The method according to claim 3, further comprising:
when the edge IP address and the cache IP address belonging to the same point of presence are not exist in the current region, determining a high-level region where the current region is subordinate to, and determining an edge IP address and a cache IP address belonging to a same point of presence in the high-level region.

6. The method according to claim 5, further comprising:
when the edge IP address and the cache IP address belonging to the same point of presence are not exist in the high-level region, obtaining a set of edge IP addresses pre-configured in the current region for the edge computing domain name, and feeding back the set of edge IP addresses to the public network DNS server, such that the public network DNS server resolves the edge computing domain name into a target IP address in the set of edge IP addresses.

7. The method according to claim 6, further comprising:
after receiving the domain name resolution request comprising the accelerated domain name transmitted from the node DNS server in the edge node directed by the target IP address, obtaining a set of cache IP addresses pre-configured in the current region for the accelerated domain name, and feeding back the set of cache IP addresses to the node DNS server, such that the node DNS server resolves the accelerated domain name into an IP address in the set of cache IP addresses.

8. The method according to claim 3, further comprising:
receiving a node information change notification transmitted from a content delivery network (CDN) scheduling system, and updating, according to the node information change notification, IP address information and point of presence (POP) information in the set of edge IP addresses and the set of cache IP addresses.

9. The method according to claim 3, further comprising:
receiving, by the node DNS server, a domain name resolution request transmitted from a node server in the edge node, wherein the domain name resolution request comprises an accelerated domain name;
obtaining, by the node DNS server, the cache IP address of the cache server from a scheduling system for edge computing, wherein the cache server belongs to the same point of presence with the node server in the current region; and
feeding back, by the node DNS server, the cache IP address to the node server, such that the node server obtains a resource corresponding to the accelerated domain name from the cache server directed by the cache IP address.

10. The method according to claim 9, further comprising:
when a node server and a cache server belonging to the same point of presence are not exist in the current region, obtaining, by the node DNS server from the scheduling system for edge computing, the cache IP address of the cache server, wherein the cache sever belongs to the same point of presence with the node server in a high-level region where the current region is subordinate to.

11. The method according to claim 10, further comprising:
when a node server and a cache server belonging to the same point of presence are not exist in the high-level region, obtaining, by the node DNS server, a set of cache IP addresses pre-configured for the node DNS server from the scheduling system for edge computing, and feeding back the set of cache IP addresses to the node server, such that the node server obtains the resource corresponding to the accelerated domain name from the cache server directed by any one cache IP address in the set of cache IP addresses.

12. The method according to claim 2, wherein the obtaining a target resource directed by the accelerated domain name from a cache server, and providing the obtained target resource to the terminal device comprising:
receiving a resource obtaining request transmitted from the terminal device, and searching for a cache server storing the target resource directed by the resource obtaining request; and
feeding back, to the terminal device, an IP address of an edge node positioned in a same server room with the cache server, such that the target resource is obtained from the cache server in the same server room by means of the edge node after the terminal device accesses an edge node at the IP address.

13. The method according to claim 12, wherein the feeding back, to the terminal device, an IP address of an edge node positioned in a same server room with the cache server comprising:
after the IP address of the edge node positioned in the same server room with the cache server is determined, generating a redirected link comprising the IP address, and feeding back the redirected link to the terminal device.

14. The method according to claim 12, further comprising:
when feeding back, to the terminal device, the IP address of the edge node positioned in the same server room with the cache server, further feeding back an original link of the target resource to the terminal device, such that the edge node obtains the target resource from the cache server based on the original link.

15. The method according to claim 2, wherein a custom program is further deployed in the edge node; and after obtaining the target resource directed by the accelerated domain name from the cache server, the method further comprising:
after the target resource is processed by means of the custom program, providing the processed resource to the terminal device.

16. A scheduling server for edge computing, wherein the scheduling server for edge computing comprises a processor and a memory, the memory is configured to store a computer program, and when the computer program is executed by the processor, the method according to any one of claims 1 to 15 is implemented.
